(19) Europäisches Patentamt
European Patent Office
Office européen des brevets

(11) Publication number: **0 109 604**
**B1**

# (12) EUROPEAN PATENT SPECIFICATION

(45) Date of publication of patent specification: **27.09.89**

(51) Int. Cl.⁴: **G 02 B 6/16**

(21) Application number: **83111109.1**

(22) Date of filing: **09.01.81**

(60) Publication number of the earlier application in accordance with Art. 76 EPC: **0 032 390**

## (54) Polarised plane-maintaining optical fiber.

(30) Priority: **11.01.80 JP 1330/80**
**07.03.80 JP 28149/80**
**18.08.80 JP 112741/80**

(43) Date of publication of application:
**30.05.84 Bulletin 84/22**

(45) Publication of the grant of the patent:
**27.09.89 Bulletin 89/39**

(84) Designated Contracting States:
**DE FR GB NL**

(56) References cited:
**GB-A-2 012 983**

**APPLIED PHYSICS LETTERS, vol. 33, no. 8, 15th October 1978, pages 699-701, American Institute of Physics, New York, US. R.H. STOLEN et al.: "Linear polarization in birefringen single-mode fibers"**

(73) Proprietor: **HITACHI, LTD.**
**6, Kanda Surugadai 4-chome Chiyoda-ku**
**Tokyo (JP)**

(72) Inventor: **Matsumura, Hiroyoshi**
**264-61, Oaza Kubo Hidaka-cho**
**Iruma-gun Tokyo (JP)**
Inventor: **Katsuyama, Toshio**
**1-47-1, Akatsuki-cho**
**Hachiouji-shi Tokyo (JP)**
Inventor: **Suganuma, Tsuneo**
**5-17-5, Naka-Arai**
**Tokorozawa-shi Saitama (JP)**

(74) Representative: **Strehl, Peter, Dipl.-Ing. et al**
**Patentanwälte Strehl Schübel-Hopf Groening Schulz Maximilianstrasse 54 Postfach 22 14 55**
**D-8000 München 22 (DE)**

(56) References cited:
**APPLIED OPTICS, vol. 18, no. 24, 15th December 1979, pages 4080-4084, New York, US. V. RAMASWAMY et al.: "Birefingence in elliptically clad borosilicate single-mode fibers"**

**EP 0 109 604 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a linear polarisation-maintaining single-mode optical fiber.

Along with the progress in the development of optical fibers, steady development has been made to realise optical circuits such as isolators, switching circuit mixers and the like by means of optical integrated circuits. The waveguide structure used in optical integrated circuits is fundamentally of a slab type. To realise a switch circuit by an optical integrated circuit, the waveguide must be formed in the slab structure to achieve a polarisation of the light. It is desired in the art to effectively combine such an integrated circuit with other optical devices by the use of optical fibers, but in such a case, the optical fiber must be capable of maintaining the polarisation plane in a specific direction.

Further, there have been made various proposals to carry out measurements by making use of the polarisation plane of the light. To realise such measurements, a critical problem to be solved is to transmit the light while maintaining its linear polarisation. It would be desirable from the viewpoint of both transmission efficiency and production technique if transmission of the light could be made while maintaining the linear polarisation by the use of a circuit cross-section optical fiber that has reached the stage of practical application at present.

As a circular cross-section optical fiber capable of maintaining the polarisation plane, there has conventionally been proposed an optical fiber consisting of a core, a cladding and a jacket wherein the thickness of the jacket is made non-uniform so that stress is induced in the core portion, and the difference of mechanical stresses along the transverse direction inside the mutually orthogonal waveguide regions of the core and the cladding keeps the difference in the refractive indices (hereinafter referred to as "strain birefringence") at a level higher than a predetermined value. ("Birefringence in elliptical clad borosilicate single mode fibers", "Applied Optics", Vol. 18, No. 24, December 1979) pp. 4080—4084.

In other words, for maintaining the polarisation plane, when the difference in the propagation constants of the polarised wave in transverse directions of the optical fiber crossing each other at right angles is defined as $\Delta\beta$, the smaller the value L of the following equation (hereinafter called "coupling length"), the greater the degree of maintenance of the polarised wave

$$\left(L=\frac{2\pi}{\Delta\beta}\right).$$

Hence, if the core is of circular cross-section, this difference in the propagation constants $\Delta\beta$ is determined by the difference in the refractive indices $\Delta n$ for the two directons of the polarised light, and the difference in the refractive indices $\Delta n$ is proportional to the difference in the strains in these two directions, the latter utilising the difference in the thermal expansion coefficients between the jacket and the cladding.

According to the above-mentioned proposal, however, it is necessary, as a means for rendering the thickness of the jacket non-uniform, to deform the jacket at the initial stage of the production process. Accordingly, the productiion process becomes complicated and, at the same time, a coupling length L of less than 10 mm cannot be obtained in practice.

A linear polarisation-maintaining single-mode optical fiber as defined in the first part of claim 1 is known from GB—A—2 012 983. There, the circular core through which a large portion of the light energy propagates is made of undoped $SiO_2$ and the cladding, which is formed of two layers, has an elliptical outer surface to produce the birefringence required to maintain the linear polarisation, and is made of $SiO_2$ including $B_2O_3$ in order to achieve a refractive index lower than that of the core. It has been found, however, that it is not possible with this known optical fiber to lower the transmission loss without reducing the capability of maintaining the polarisation plane.

It is therefore an object of the present invention to realize an optical fiber which maintains the polarisation plane and has a low transmission loss.

This object is accomplished by the optical fiber set forth in claim 1. In this fiber, the cladding is made of low-loss material (undoped $SiO_2$) and has a circular surface, and part of the jacket (referred to as "inner jacket" in claim 1) is formed with an elliptical outer surface to generate birefringence in the core.

As will be illustrated in the later-appearing example, the present invention makes it possible to realise a polarised plane-maintaining optical fiber having a coupling length of about 1 mm and a low loss of 0.3 dB/Km relative to light of a wavelength of 1.5 µm.

These and other objects and features of the present invention will become more apparent from the following description to be read in conjunction with the accompanying drawings, in which

Fig. 1 shows the sectional structure of a conventional polarised plane-maintaining optical fiber, and

Fig. 2 shows the sectional structure of a polarised plane-maintaining optical fiber in accordance with the present invention.

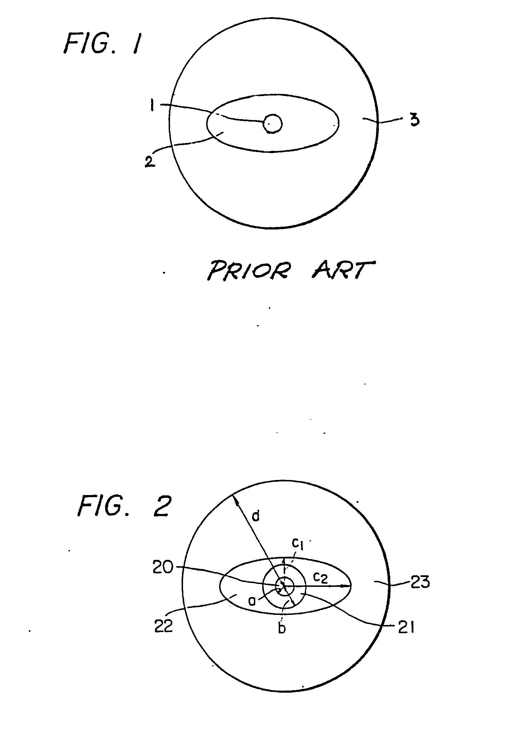

In order to facilitate the understanding of the present invention, at first, the sectional structure of an optical fiber according to GB—A—2 012 983 will be explained in connection with Fig. 1. In Fig. 1, reference numeral 1 represents a circular core consisting of $SiO_2$ glass and reference numeral 2 represents a layer having an elliptical outer circumference. The layer 2 is formed of a cladding surrounding the core 1 and consisting of $SiO_2$ glass containing great amounts of $B_2O_3$, and an intermediate layer surrounding the cladding. Reference numeral 3 represents an outer jacket of

$SiO_2$ glass surrounding the layer 2 and having a substantially circular outer shape.

The optical fiber shown in Fig. 1 has the disadvantage of a relatively large transmission loss since glass including $B_2O_3$ does not have a refractive index difference more than 0.7% with respect to $SiO_2$ glass. In case the boron oxide ($B_2O_3$) content of the layer 2 is too high, absorption due to lattice vibrations for longer wavelengths (e.g. longer than 1.2 μm) causes still another problem in that the loss cannot be lower than 1 dB/Km for a wavelength which is intrinsically deemed as a low-loss region (e.g. 1.55 μm band) for an optical fiber of borin oxide glass.

The optical fiber in accordance with the present invention as shown in Fig. 2 comprises a core 20 and a cladding 21 (forming the light energy transmission portion, hereinafter referred to as an "optical waveguide" in order to distinguish it from the term "optical fiber"), and inner and outer jackets 22, 23, formed around the outer circumference of the optical waveguide.

The core 20 has a circular cross-section and consists of silica glass containing a small amount of $GeO_2$, the cladding 21 has a circular outer surface and consists of silica glass not doped with a dopant, the inner jacket 22 has an elliptical outer surface and consists of silica glass containing $B_2O_3$ and $GeO_2$ as dopants, and the outer jacket 23 consists of silica glass.

The refractive index is 1.002 n for the core 20, n for the $SiO_2$ cladding 21, 0.9999 n for the

$$SiO_2+B_2O_3+GeO_2$$

inner jacket 22, and n for the outer jacket 23, with n representing the refractive index of $SiO_2$. The core diameter 2a is 8 μm and the outer diameter 2b of the $SiO_2$ cladding 21 is 20 μm. The length of the minor axis $2c_1$ of the inner jacket 22 is 35 μm while the length of its major axis $2c_2$ is 100 μm. The outer diameter 2d of the outer jacket 23 is 150 μm. The coupling length of this optical waveguide is 0.8 mm for light of a wavelength of 0.633 μm and its transmission loss is as low as 0.3 dB/Km at a wavelength of 1.55 μm.

Though this embodiment uses $GeO_2$ as the dopant in order to increase the refractive index, this dopant may be replaced by, or used in addition to, $P_2O_5$. The core 20 and the cladding 21 may each have a constant refractive index; alternatively, the core may have a graded refractive index as is generally known in the art. In order to deprive the inner jacket 22 of the function of a waveguide, it is necessary that its refractive index be at least 0.998 times that of the cladding 21.

**Claims**

1. A linear polarisation-maintaining single-mode optical fiber consisting of silica glass, said optical fiber having:

a core (20) of circular cross-section,

a cladding (21) surrounding said core (20) and having a lower refraction index than the core (20),

an intermediate layer (22) formed on said cladding (21) and having an outer surface of elliptical cross-section, and

an outer jacket (23) formed on said intermediate layer (22) and having an outer surface of circular cross-section,

characterized in that:

said cladding (21) has an outer surface of circular cross-section and consists of undoped silica glass,

that said intermediate layer (22) forms an inner jacket consisting of silica glass containing $B_2O_3$ and at least one of $GeO_2$ or $P_2O_5$, said inner jacket having a refractive index not lower by more than 0.2% than that of said cladding (21), and

that said core (20) consists of silica glass containing $GeO_2$ or $P_2O_5$.

2. The optical fiber of claim 1, characterised in that said core (20) has a graded refractive index.

**Patentansprüche**

1. Aus Silicatglas bestehende optische Einmoden-Faser mit Erhaltung einer linearen Polarisation, umfassend

einen Kern (20) mit kreisförmigem Querschnitt,

eine den Kern (20) umgebende Deckschicht (21), die einen niedrigeren Brechungsindex hat als der Kern (20),

eine auf der Deckschicht (21) angeordnete Zwischenschicht (22), die eine Außenfläche mit elliptischem Querschnitt aufweist, und

einen auf der Zwischenschicht (22) angeordneten äußeren Mantel (23), der eine Außenfläche mit kreisförmigem Querschnitt aufweist,

dadurch gekennzeichnet,

daß die Deckschnitt (21) eine Außenfläche mit kreisförmigem Querschnitt aufweist und aus undotiertem Silicatglas besteht,

daß die Zwischenschicht (22) einen inneren Mantel bildet, der aus $B_2O_3$ und mindestens einen der beiden Stoffe $GeO_2$ und $P_2O_5$ enthaltendem Silicatglas besteht, wobei der innere Mantel einen Brechungsindex aufweist, der nicht um mehr als 0,2% niedriger ist als der der Deckschicht (21), und

daß der Kern (20) aus $GeO_2$ oder $P_2O_5$ enthaltendem Silicatglas besteht.

2. Optische Faser nach Anspruch 1, dadurch gekennzeichnet, daß der Kern (20) einen gestuften Brechungsindex aufweist.

**Revendications**

1. Fibre optique monomode à maintien de polarisation linéaire, constituée par du verre de silice, ladite fibre optique comportant:

un coeur (20) de section transversale circulaire,

une gaine (21) entourant ledit coeur (20) et possédant un indice de réfraction inférieure à celui du coeur (20),

une couche intermédiaire (22) formée sur ladite gaine (21) et possédant une surface extérieure de section transversale elliptique, et

une enveloppe extérieure (23) formée sur ladite

couche intermédiaire (22) et possédant une surface extérieure de section transversale circulaire,

caractérisé en ce

que ladite gaine (21) possède une surface extérieure de section transversale circulaire et est constituée par du verre de silice non dopé,

que ladite couche intermédiaire (22) forme une enveloppe intérieure constituée par du verre de silice contenant du $B_2O_2$ et l'un au moins de $GeO_2$ et de $P_2O_5$, ladite enveloppe intérieure possédant un indice de réfraction non inférieure de plus de 0,2% à celui de ladite gaine (21), et

que ledit coeur (20) est constitué par du verre de silice contenant du $GeO_2$ ou du $P_2O_5$.

2. Fibre optique selon la revendication 1, caractérisé en ce que ledit coeur (20) posséde un gradient d'indice de réfraction.

FIG. 1

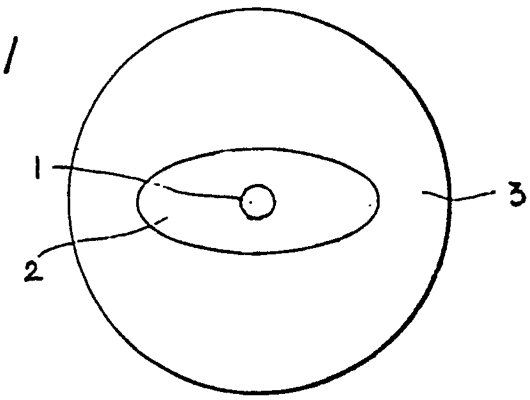


PRIOR ART

FIG. 2